(19) Europäisches Patentamt
European Patent Office
Office européen des brevets

(11) **EP 4 414 668 A1**

(12) **EUROPEAN PATENT APPLICATION**
published in accordance with Art. 153(4) EPC

(43) Date of publication:
**14.08.2024 Bulletin 2024/33**

(21) Application number: **22892593.9**

(22) Date of filing: **26.10.2022**

(51) International Patent Classification (IPC):
**G01D 21/00** (2006.01)    **G01B 11/00** (2006.01)
**G01N 29/265** (2006.01)

(52) Cooperative Patent Classification (CPC):
**G01B 11/00; G01D 21/00; G01N 29/265**

(86) International application number:
**PCT/JP2022/039920**

(87) International publication number:
**WO 2023/085093 (19.05.2023 Gazette 2023/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.11.2021 JP 2021185159**

(71) Applicant: **JFE Steel Corporation
Tokyo 100-0011 (JP)**

(72) Inventors:
• **MATSUI, Yutaka**
**Tokyo 100-0011 (JP)**
• **TERADA, Kazuki**
**Tokyo 100-0011 (JP)**
• **IMANAKA, Hiroki**
**Tokyo 100-0011 (JP)**
• **UEMATSU, Kento**
**Tokyo 100-0011 (JP)**

(74) Representative: **Hoffmann Eitle
Patent- und Rechtsanwälte PartmbB
Arabellastraße 30
81925 München (DE)**

(54) **GUIDE DEVICE, GUIDANCE METHOD, MEASUREMENT DEVICE, PRODUCT PRODUCTION EQUIPMENT, MEASUREMENT METHOD, PRODUCT PRODUCTION METHOD, AND PRODUCT QUALITY MANAGEMENT METHOD**

(57)    A guiding device according to the present invention includes a guiding unit configured to guide a scanning position of a measurement unit with respect to a measurement target when a measurement unit configured to measure a physical quantity of the measurement target performs scanning. The guiding unit includes at least two linear guide markers configured to guide the scanning position, and the at least two linear guide markers are arranged at positions ahead of a measurement position of the measurement unit in a scanning direction at predetermined intervals with the scanning position being interposed therebetween.

FIG.6

EP 4 414 668 A1

## Description

Field

The present invention relates to a guiding device, a guiding method, a measurement device, an object manufacturing facility, a measuring method, an object manufacturing method, and an object quality control method. Background

A steel material used in a line pipe, shipbuilding, a pressure vessel, a construction machine, and the like is manufactured through hot rolling, heat treatment, cutting (shearing or gas cutting), and the like after continuous casting or ingot casting, and blooming and forging as necessary The manufactured steel material is shipped after performance of an appearance and dimension inspection, an ultrasonic flaw detection test, a hardness inspection of a surface layer, an inspection of a mechanical characteristic by sampling, and the like. As one of defects of the steel material which are problematic in a final product, there is a defect generated inside the steel material, or a defect called a hard spot in which the surface layer of the steel material is partially hardened or a soft spot in which the surface layer is partially softened. As a method of measuring these defects, there is a method of performing the measurement by using a cart to which a measuring instrument is attached. For example, a method of performing measurement with a sensor attached to a remotely operable cart is described in Non-Patent

Literature 1, and a method of performing measurement with a sensor attached to a hand push-type cart is described in

Non-Patent Literature 2.

Citation List

Non Patent Literature

   Non Patent Literature 1: Bernd Wolter, Yasmine Gabi, and Christian Conrad, "Nondestructive Testing with 3MA-An Overview of Principles and Application", Appl. Sci. 2019, 9, 1068
   Non Patent Literature 2: Gerald Schneibel, Christoph Konig, Aschwin Gopalan, Jean-Marc Dussaulx, "Development of an Eddy Current based Inspection Technique for the Detection of Hard Spots on Heavy Plates", 19th World Conference on Non-Destructive Testing 2016

Summary

Technical Problem

In the conventional defect measuring method, for example, a measuring instrument attached to a cart is made to come into contact with a surface layer of a steel material and a defect is measured. Specifically, in a case of measurement by eddy current detection or electromagnetic measurement, the measuring instrument is installed in such a manner that the measuring instrument itself is pressed against the steel material or an interval between a surface of the measuring instrument and a surface of the steel material is kept constant. In addition, in a case of measurement by ultrasonic waves, the measuring instrument is installed similarly to a case of the measurement by the eddy current detection or the electromagnetic measurement. Thus, in order to perform measurement without missing on the surface of the steel material by using the measuring instrument attached to the cart, a method in which a measurement position is determined in advance by drawing of a marking line (such as a guide line, chalk line, or charcoal line) on the surface of the steel material in such a manner as not to generate a place that is not measured, and the cart is moved in such a manner as to perform scanning with the measuring instrument along the marking line is often used.

However, it is difficult to perform the measurement while moving the cart and checking whether the scanning is performed with the measuring instrument correctly along the marking line. In a case of the measurement by the ultrasonic waves, there is a method of performing monitoring whether the measuring instrument is correctly arranged and functions during the measurement by using a reflected wave from the inside of the steel material. However, reliability of this method is low since intensity of the reflected wave used for the monitoring varies greatly. In addition, in a case of the measurement by the eddy current detection or the electromagnetic measurement, there is no method of checking whether the measuring instrument is correctly arranged and functions during the measurement. Furthermore, these problems do not change in both a case where the cart is moved by human power and a case where the cart is moved by machine force. The case where the cart is moved by the machine force includes a case where the cart moves semi-automatically or automatically.

The present invention has been made to solve the above problems, and an object thereof is to provide a guiding device, a guiding method, a measurement device, and a measuring method capable of performing measurement with high reliability without missing on a portion to be measured of an object. In addition, another object of the present invention is to provide an object manufacturing facility and manufacturing method capable of improving a manufacturing yield of the object by performing measurement with high reliability without missing on the portion to be measured of the object. Furthermore, another object of the present invention is to provide an object quality control method capable of improving quality of the object by performing measurement with high reliability without missing on the portion to be measured of the object.

Solution to Problem

(1) A guiding device according to the present invention includes: a guiding unit configured to guide a scanning position of a measurement unit with respect to a measurement target when the measurement unit configured to measure a physical quantity of the measurement target performs scanning, wherein the guiding unit includes at least two linear guide markers configured to guide the scanning position, and the at least two linear guide markers are arranged at positions ahead of a measurement position of the measurement unit in a scanning direction at predetermined intervals with the scanning position being interposed therebetween.

(2) In the guiding device according to (1), the guiding unit includes one or a plurality of linear guide markers indicating the scanning position.

(3) In the guiding device according to (1) or (2), the at least two linear guide markers extend in the scanning direction.

(4) In the guiding device according to any one of (1) to (3), the guiding unit is configured to radiate line laser beams as the guide markers.

(5) In the guiding device according to any one of (1) to (4), the guiding unit includes: an imaging unit configured to shoot an image including the scanning position; and a display unit that displays the guide markers in a manner of being superimposed on the image shot by the imaging unit.

(6) The guiding device according to any one of (1) to (5) further includes a monitoring unit configured to monitor a pressing amount of the measurement unit against the measurement target and/or an interval between the measurement target and the measurement unit, and give notification of predetermined information in a case where the pressing amount and/or the interval do not satisfy a predetermined condition.

(7) A guiding method according to the present invention includes: a guiding step of guiding a scanning position of a measurement unit with respect to a measurement target when the measurement unit configured to measure a physical quantity of the measurement target performs scanning, wherein the guiding step includes a step of presenting at least two linear guide markers configured to guide the scanning position, and the at least two linear guide markers are arranged at positions ahead of a measurement position of the measurement unit in a scanning direction at predetermined intervals with the scanning position being interposed therebetween.

(8) A measurement device according to the present invention includes: the measurement unit configured to measure the physical quantity of the measurement target; and the guiding device according to any one of (1) to (6).

(9) An object manufacturing facility according to the present invention includes: a manufacturing facility configured to manufacture an object; and the measurement device according to claim (8), wherein the object is manufactured while a physical quantity of the object manufactured in the manufacturing facility is measured with the measurement device.

(10) A measuring method of the present invention includes a step of measuring a physical quantity of an object by using the guiding method according to (7).

(11) An object manufacturing method of the present invention includes a step of manufacturing the object while measuring the physical quantity of the manufactured object by using the measuring method according to (10).

(12) An object quality control method of the present invention includes a step of classifying the object based on the measured physical quantity by using the measuring method according to (10).

(13) A guiding device of the present invention includes: a guiding unit configured to guide a scanning position of a working unit with respect to an object when the working unit configured to perform predetermined work on a surface of the object performs scanning, wherein the guiding unit includes at least two linear guide markers configured to guide the scanning position, and the at least two linear guide markers are arranged at positions ahead of a measurement position of the work in a scanning direction at predetermined intervals with the scanning position being interposed therebetween.

(14) A guiding method of the present invention includes: a guiding step of guiding a scanning position of a working unit with respect to an object when the working unit configured to perform predetermined work on a surface of the object performs scanning, wherein the guiding step includes a step of presenting at least two linear guide markers configured to guide the scanning position, and the at least two linear guide markers are arranged at positions ahead of a measurement position of the working unit in a scanning direction at predetermined intervals with the scanning position being interposed therebetween.

(15) An object manufacturing facility of the present invention includes: the guiding device according to (13), wherein the object is manufactured by utilization of the guiding device.

(16) A work device includes: the work unit configured to perform predetermined work on the surface of the object; and the guiding device according to (13).

(17) A work method of the present invention includes a step of performing work on the surface of the object by utilization of the guiding method according to (14)

(18) An object manufacturing method of the present invention includes: a step of manufacturing the object while performing the work on the surface of the objet by utilization of the work method according to (17). Advantageous Effects of Invention

According to the guiding device, the guiding method, the measurement device, and the measuring method according to the present invention, it is possible to perform measurement with high reliability without missing on a portion to be measured on an object. In addition, according to the object manufacturing facility and manufacturing method according to the present invention, it is possible to improve a manufacturing yield of the object by performing measurement with high reliability without missing on the portion to be measured of the object. In addition, according to the object quality control method according to the present invention, it is possible to improve quality of the object by performing measurement with high reliability without missing on the portion to be measured of the object.

Brief Description of Drawings

FIG. 1 is a schematic diagram illustrating a configuration of a measurement device according to one embodiment of the present invention.

FIG. 2 is a block diagram illustrating the configuration of the measurement device according to the one embodiment of the present invention.

FIG. 3 is a plan view and a side view illustrating a configuration example of a physical quantity measurement unit illustrated in FIG. 2.

FIG. 4 is a view illustrating an example of marking lines.

FIG. 5 is a view for describing a method of setting an interval between the marking lines.

FIG. 6 is a view for describing a projection position of a line laser.

FIG. 7 is a view for describing a modification example of the method of setting an interval between marking lines.

FIG. 8 is a view illustrating an example of a measurement map of a steel material surface which map is acquired by the measurement device according to the one embodiment of the present invention.

FIG. 9 is a schematic view illustrating a configuration of a first modification example of the measurement device illustrated in FIGS. 1 and 2.

FIG. 10 is a schematic view illustrating the configuration of the first modification example of the measurement device illustrated in FIGS. 1 and 2.

FIG. 11 is a view illustrating a state in which the steel material is installed in a manner of being inclined in a conveyance direction.

FIG. 12 is a schematic view illustrating a configuration of a second modification example of the measurement device illustrated in FIGS. 1 and 2.

FIG. 13 is a view illustrating a state in which the steel material is installed in a manner of being inclined in the conveyance direction.

FIG. 14 is a view illustrating a modification example of a guide line.

Description of Embodiments

Hereinafter, a measurement device that is one embodiment of the present invention will be described with reference to the drawings.

[Configuration]

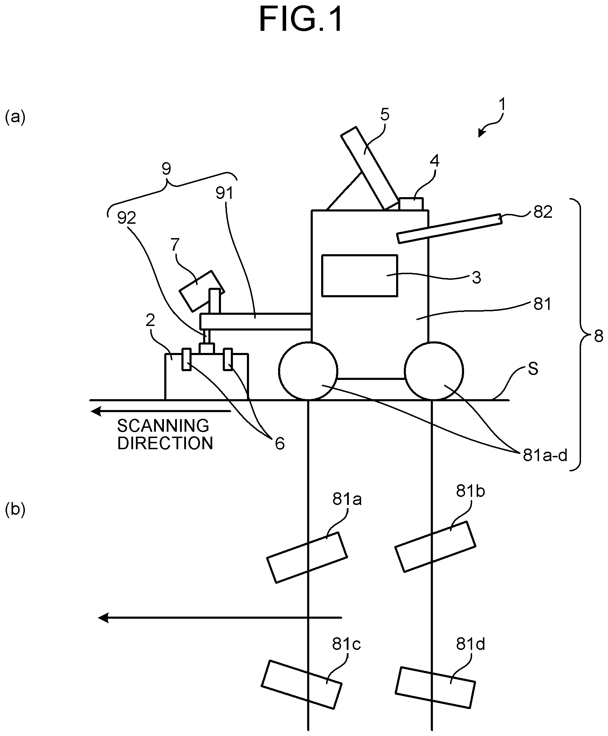

First, a configuration of a measurement device 1 that is one embodiment of the present invention will be described with reference to FIG. 1 to FIG. 3.

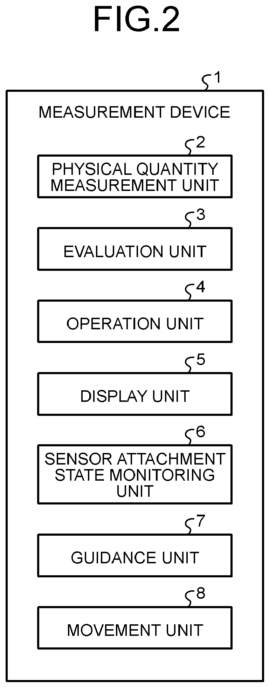

The measurement device 1 according to the one embodiment of the present invention can be moved by an operator, and measures a mechanical characteristic of a surface layer of a steel material S. As the steel material S, a thick steel material serving as a material of a steel pipe used for a line pipe or the like can be an example. As illustrated in FIG. 1 and FIG. 2, the measurement device that is the one embodiment of the present invention includes a physical quantity measurement unit 2, an evaluation unit 3, an operation unit 4, a display unit 5, a sensor attachment state monitoring unit 6, a guidance unit 7, a movement unit 8, and a connection unit 9.

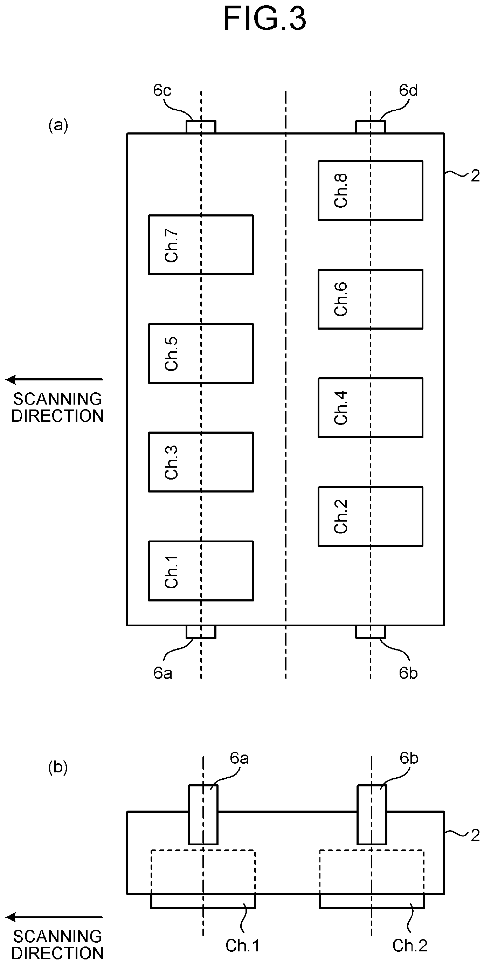

The physical quantity measurement unit 2 includes an ultrasonic sensor, and a sensor for eddy current detection or electromagnetic measurement. In the present embodiment, as illustrated in FIGS. 3(a) and (b), the physical quantity measurement unit 2 includes a plurality of (eight in the present example) sensors (Ch.1 to Ch.8). Although only one sensor may be included in the physical quantity measurement unit 2, it is preferable to include a plurality of sensors since a range of the steel material S that can be scanned at a time can be widened and measurement efficiency can be improved. In addition, each sensor has a structure capable of pressing the physical quantity measurement unit 2 downward via the connection unit 9 or the like to the surface of the steel material S.

The description returns to FIG. 2. The evaluation unit 3 includes an arithmetic processing device such as a microcomputer, measures the surface of the steel material S by using the physical quantity measurement unit 2, and outputs a measurement result to the display unit 5. Some or all of the evaluation unit 3, the operation unit 4, and the display unit 5 may be integrated by utilization of an information processing device such as a tablet or a PC.

The operation unit 4 includes an input device such as a keyboard, a mouse pointer, or a touch pad. The operation unit 4 is operated when an operation amount or contents necessary for operation of the physical quantity measurement unit 2 or the evaluation unit 3 are input, and outputs an operation input signal to the evaluation unit 3. The operation unit 4 may be a device capable of setting a necessary operation amount, such as a toggle switch (dial switch).

The display unit 5 includes a display device such as a liquid crystal display, and displays information related to a measurement result of the steel material S which result is output from the evaluation unit 3, and operation information of the physical quantity measurement unit 2 and the evaluation unit 3. In the present embodiment, the display unit 5 displays the measurement result on a map of the steel material S. Specifically, the display unit 5 displays a position, in which the mechanical characteristic on the steel material S is a preset value, on the map of the steel material S. The display unit 5 may display a scanning speed and a movement amount of a cart at the time of measurement. In addition, the display unit 5 may display a monitoring result of an attachment state of the sensor which state is output from the sensor attachment state monitoring unit 6. In addition, the display unit 5 may give notification of the measurement result by voice.

In order for the physical quantity measurement unit 2 to correctly measure a physical quantity of the steel material S, it is preferable that the sensor of the physical quantity measurement unit 2 is pressed against the steel material S in such a manner as to be in contact with the surface of the steel material S, or an interval between the surface of the steel material S and the sensor of the physical quantity measurement unit 2 is kept constant. However, since the physical quantity measurement unit 2 does not correctly follow the surface of the steel material S due to undulation of the surface of the steel material S, the pressing by the physical quantity measurement unit 2 is weakened, and the physical quantity measurement unit 2 is released from the steel material S or an interval between the surface of the steel material S and the physical quantity measurement unit 2 cannot be kept constant. Thus, a portion where the measurement is not correctly performed may be generated. In this case, it is preferable to include the sensor attachment state monitoring unit 6 described next.

The sensor attachment state monitoring unit 6 is a device that monitors whether the sensor of the physical quantity measurement unit 2 is correctly attached to the surface of the steel material S and/or whether the interval between the surface of the steel material S and the surface of the sensor is kept constant. In the present embodiment, as illustrated in FIGS. 3(a) and (b), the sensor attachment state monitoring unit 6 monitors the attachment state of the sensor by measuring a distance between the sensor and the steel material S by using laser distance meters 6a to 6d attached on a straight line passing through a center position in a longitudinal direction of the sensor included in the physical quantity measurement unit 2. The attachment state of the sensor may be monitored by utilization of not only the laser distance meter but also an eddy current type distance meter or a contact type touch sensor.

The description returns to FIG. 2. The guidance unit 7 is a device that guides the physical quantity measurement unit 2 at the time of scanning with respect to a marking line drawn on the surface of the steel material S. Specifically, the guidance unit 7 projects, with respect to one marking line, three line laser beams parallel to the marking line and guides the physical quantity measurement unit 2. In the present embodiment, an interval between the three line laser beams is set to a width of PL. A unit of projecting the three line laser beams with respect to the marking line is not a limitation. For example, three guide members may be arranged with respect to the marking line, or an image of the marking line may be shot by an imaging unit, and an image acquired by superimposition of an image of the three guide lines on the shot image of the marking line may be displayed on the display unit 5. The guidance unit 7, the guide member, and the display unit 5 function as guiding unit according to the present invention. The line laser beams, the guide member, and the guide lines function as guide markers according to the present invention.

The movement unit 8 includes, for example, a hand cart (trolley). More specifically, the movement unit 8 includes a cart 81 that can be moved with the physical quantity measurement unit 2, the evaluation unit 3, the operation unit 4, the display unit 5, the sensor attachment state monitoring unit 6, the guidance unit 7, and the connection unit 9 being placed thereon, and a handle 82 for the operator to control the movement (such as a movement amount, a moving speed, a moving direction, and the like) of the cart 81, and scans the surface of the steel material S with the physical quantity measurement unit 2. Four wheels 81a to 81d are attached to the cart 81. The operator measures the steel material S by scanning the surface of the steel material S with the physical quantity measurement unit 2 by using the movement unit 8. At this time, since the cart 81 includes the wheels 81a to 81d, the operator can perform scanning with the physical quantity measurement unit 2 while controlling the movement amount, the moving speed, and the moving direction of the physical quantity measurement unit 2 by pushing the handle 82. As illustrated in FIGS. 1(a) and (b), in a case where the four wheels 81a to 81d are included as the movement unit 8, it is preferable that the wheels are arranged inward in a scanning direction in order to improve straightness at the time of the scanning.

The connection unit 9 is a unit that connects the physical quantity measurement unit 2 and the evaluation unit 3 placed in the cart 81. The connection unit 9 includes an arm 91 that arranges the physical quantity measurement unit 2 on a front side in the scanning direction of the cart 81, and a cylinder 92 that holds the physical quantity measurement unit 2 in such a manner that the sensor of the physical quantity measurement unit 2 can correctly attached to the surface of the steel material S and/or the interval between the surface of the steel material S and the surface of the sensor can be kept constant. The connection unit 9 can hold the physical quantity measurement unit 2 at a position not interfering with the movement of the cart 81, and can hold the physical quantity measurement unit 2 in such a manner that the sensor of the physical quantity measurement unit 2 can be correctly attached to the surface of the steel material S and/or the interval between the surface of the steel material S and the surface of the sensor can be kept constant. Furthermore, the connection unit 9 may have a function of performing electrical connection to the evaluation unit 3 in such a manner that an output of the sensor of the physical quantity measurement unit 2 is transmitted to the evaluation unit 3. In addition, the connection unit 9 may have a function of electrically connecting the guidance unit 7 and the evaluation unit 3 in such a manner that position adjustment and control of the line laser beam of the guidance unit 7 can be performed by the evaluation unit 3 and the operation unit 4.

The connection unit 9 may include a driving unit (not illustrated) in order that the sensor of the physical quantity measurement unit 2 is correctly attached to the surface of the steel material S and/or the interval between the surface of the steel material S and the surface of the sensor is kept constant. The evaluation unit 3 and an end portion of the arm 91 to which end the physical quantity measurement unit 2 is not connected are connected to the driving unit. With this driving unit, the arm 91 moves up and down and/or the cylinder 92 extends or contracts in a vertical direction, whereby the sensor of the physical quantity measurement unit 2 can be placed at a correct position. The driving unit is preferably controlled by the evaluation unit 3. The evaluation unit 3 sets a driving amount based on an input from the operation unit 4 and/or an output of the sensor attachment state monitoring unit 6, and operates the driving unit based on the driving amount.

[Measuring method]

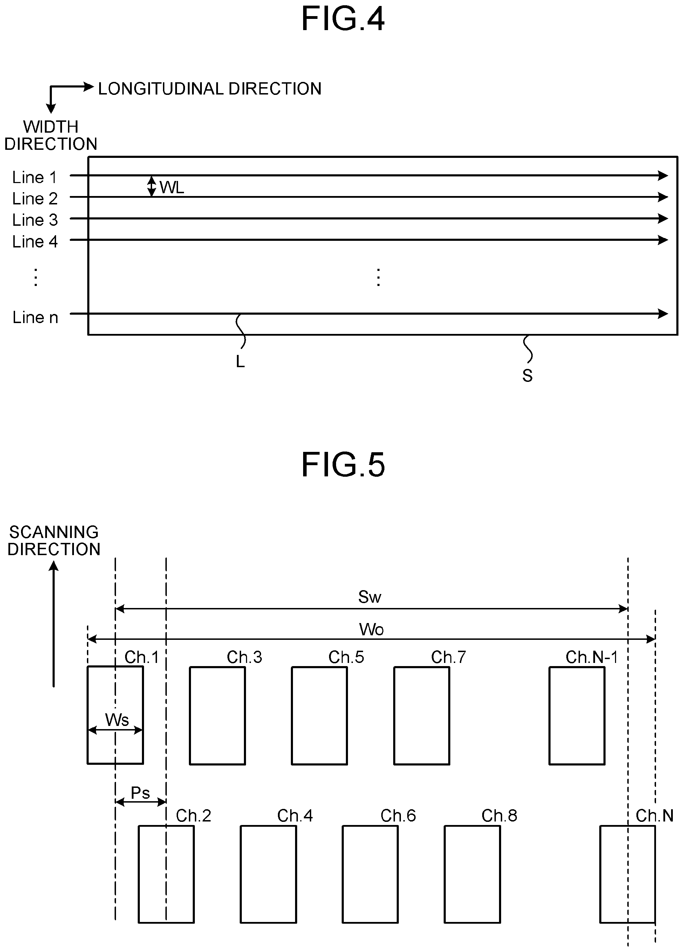

Next, a method of measuring the steel material by using the measurement device 1 will be described with reference to FIG. 4 to FIG. 8.
In order to measure the entire steel material S by using the measurement device 1, the physical quantity measurement unit 2 scans the entire surface of the steel material S. For this purpose, first, as illustrated in FIG. 4, a plurality of marking lines L (Lines 1 to n) is drawn on the steel material S with an interval thereof in a width direction of the steel material S along a longitudinal direction (scanning direction) of the steel material S being WL. The marking lines L may be manually or automatically drawn on the steel material S in a manufacturing process of the steel material S, or may be drawn on the steel material S by utilization of a dedicated facility provided side by side with the measurement device 1. These marking lines L correspond to scanning positions of the physical quantity measurement unit 2. The interval WL between the marking lines L is set as follows. That is, as illustrated in FIG. 5, in a case where the physical quantity measurement unit 2 includes N sensors Ch.1 to Ch.N arranged at arrangement intervals Ps, a length of the N sensors Ch.1 to Ch.N (width of the sensor group) $W_O$ in the width direction of the steel material S can be expressed by the following expression (1). In the expression (1), Ws represents a length (width) of one sensor (such as 30 mm) in the width direction of the steel material S. In addition, Sw illustrated in FIG. 5 represents a distance between a straight line passing through a center position in the width direction of the sensor at one end portion in the width direction (sensor Ch.1) and a straight line passing through a center position in the width direction of the sensor at the other end portion in the width direction (sensor Ch.N).

$$Wo = (Ps \times N) + Ws \qquad \cdots (1)$$

At this time, as expressed in the following expression (2), the interval WL between the marking lines L is set in such a manner that the interval WL between the marking lines L is equal to or smaller than the width $W_O$ of the sensor group. As a result, the surface of the steel material S can be scanned with scanning ranges by the sensor group being overlapped in such a manner that a detection range of one of the sensors is always placed on the surface of the steel material S. As expressed in the following expression (3), the interval WL between the marking lines L may be set in consideration of the width Ws of the one sensor. As a result, the width in which the scanning ranges of the sensor group overlap can be widened, and the entire surface of the steel material S can be more reliably scanned.

$$WL \leqq Wo \qquad \cdots (2)$$

$$WL \leqq Wo - (Ws/2) \qquad \cdots (3)$$

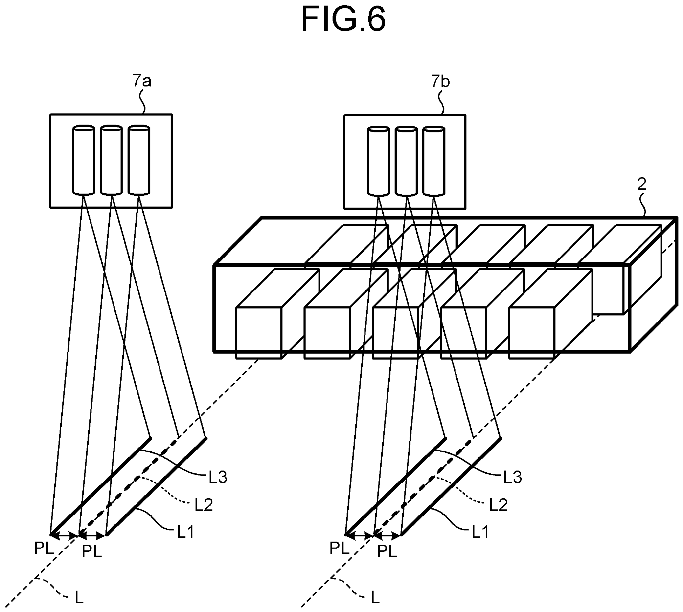

In the above description, Ws is the length (width) of the sensor in the width direction of the steel material S. However, Ws may be a length in a range measurable by the sensor in the width direction of the steel material S. In a case where the length of the sensor in the width direction of the steel material S is longer than the length of the range measurable by the sensor in the width direction of the steel material S, Ws is set to the length of the range measurable by the sensor in the width direction of the steel material S in order to scan the portion to be measured of the steel material S without missing.
Next, as illustrated in FIG. 6, the guidance unit 7 projects the three line laser beams L1 to L3 at a position ahead of the measurement position of the physical quantity measurement unit 2 in the scanning direction with the interval in the width direction of the steel material S being PL. Specifically, the guidance unit 7 projects the line laser beam L2 on the marking line L, and projects the line laser beams L1 and L3 at intervals PL on the left and right of the line laser beam L2. In other words, the guidance unit 7 projects the line laser beams L1 and L3 at predetermined intervals (here, the interval PL) with the scanning position (here, the marking line L) interposed therebetween. In addition, the line laser beam L2 indicates the scanning position (marking line L) by passing through the scanning position (marking line L). The interval PL between the line laser beam L1 and the scanning position and the interval PL between the line laser beam L3 and the scanning position are set in such a manner as to satisfy a condition expressed in the following expression (4). In a case where there is one sensor, the interval WL between the marking lines L is set in such a manner as to satisfy a condition expressed in the following expression (5), and the interval PL between the line laser beam L1 and the scanning position and the interval PL between the line laser beam L3 and the scanning position are set as expressed in the following expression (6). As a result, the line laser beams L1 and L3 indicate an overlap amount of the physical quantity measurement unit 2 with respect to the marking line L. Furthermore, since the two line laser beams L1 and L3 are projected ahead of the measurement position of the physical quantity measurement unit 2, the operator can know in advance in which direction the cart 81 should be operated. Thus, the operator can scan the entire surface of the steel material S without missing by pushing the cart 81 while checking the scanning position of the physical quantity measurement unit 2 in such a manner that the marking line L is always inside the line laser beams L1 and L3 at every pitch determined in the width direction.

$$PL < Wo - WL \qquad \cdots (4)$$

$$WL < Ws \qquad \cdots (5)$$

$$PL = Ws - WL \qquad \cdots (6)$$

In a case where the operator can clearly recognize the marking line L, the guidance unit 7 may not project the line laser beam L2. In addition, the laser color may be changed between the line laser beams L1 to L3 in such a manner that the line laser beam L2 is red and the line laser beams L1 and L3 are green, for example. Specifically, by changing the laser color between the line laser beam L2 and the line laser beams L1 and L3, the operator can easily recognize maximum positions of an allowable deviation amount. As a result, there is an effect that the operator can easily perform scanning with the measurement device 1 along the marking line L.

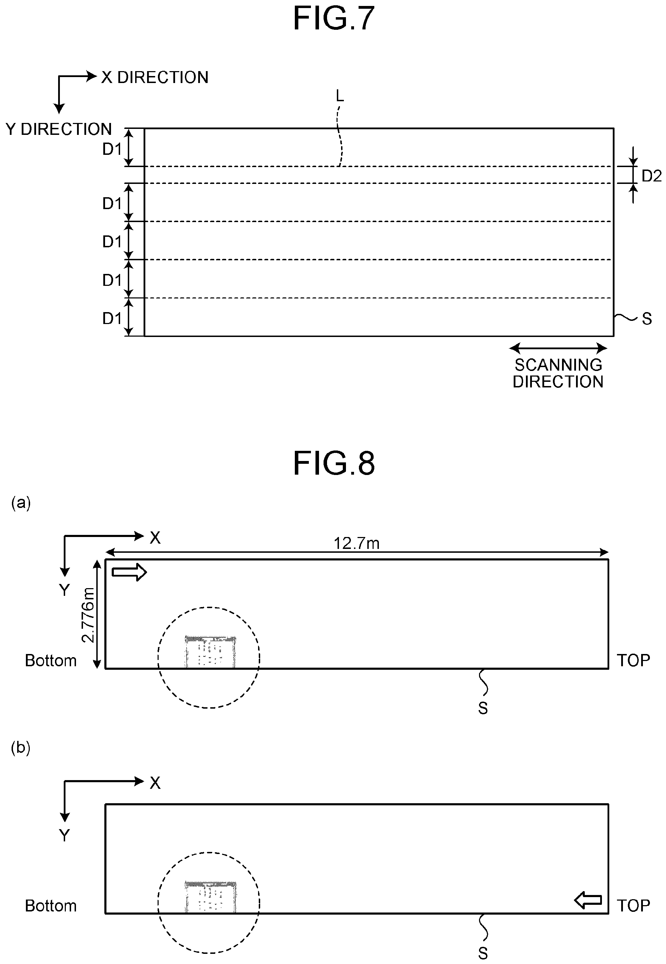

In the present embodiment, the plurality of marking lines L is drawn on the steel material S at equal intervals, but the intervals of the plurality of marking lines L are not necessarily equal intervals. Specifically, depending on the dimension of the steel material S, it may not be possible to draw the plurality of marking lines L at the set equal intervals WL on the steel material S. In such a case, for example, as illustrated in FIG. 7, the plurality of marking lines L may be drawn on the steel material S by a combination of the interval WL and an interval shorter than the interval WL. As a result, the marking lines L can be drawn in the entire scanning range, and the entire surface of the steel material S can be scanned without a missing portion. In the example illustrated in FIG. 7, the plurality of marking lines L is drawn on the steel material S with D1 as the interval WL and D2 as the interval shorter than the interval WL.

An example of a measurement map for the mechanical characteristic of the steel material S which map is acquired by the measurement device according to the one embodiment of the present invention is illustrated in FIGS. 8(a) and (b). In the present example, the surface layer hardness was used as an example of the mechanical characteristic of the steel material S. Specifically, a surface layer hardness distribution from the surface of the steel material S to a depth of about 300 $\mu$m was measured, and the surface layer hardness distribution was mapped in such a manner as to indicate a portion where the measured surface layer hardness was 230 Hv or more. Here, an eddy current signal from the surface layer of the steel material S to the depth of about 300 $\mu$m was measured by a micromagnetic multiparameter microstructure and stress analysis (3MA) technique with an eddy current detection sensor as the sensor of the physical quantity measurement unit 2, and the surface layer hardness was calculated by the evaluation unit 3 from the measured eddy current signal. A white arrow in each of the drawings indicates a scanning start position. Although the scanning start positions are different between the example illustrated in FIG. 8(a) and the example illustrated in FIG. 8(b), a portion having a hardness of 230 Hv or more (region surrounded by a broken line) is detected at the same position in both measurement results. As a result, according to the measurement device that is the one embodiment of the present invention, it has been confirmed that the measurement can be performed with high reliability without missing on the portion to be measured of the steel material S.

Finally, a modification example of the measurement device 1 will be described.

[First modification example]

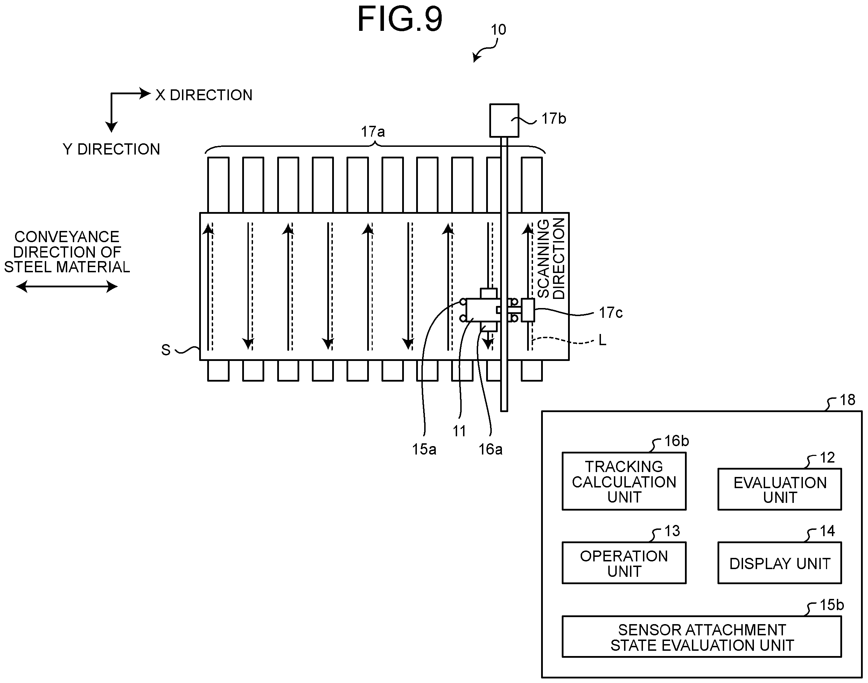

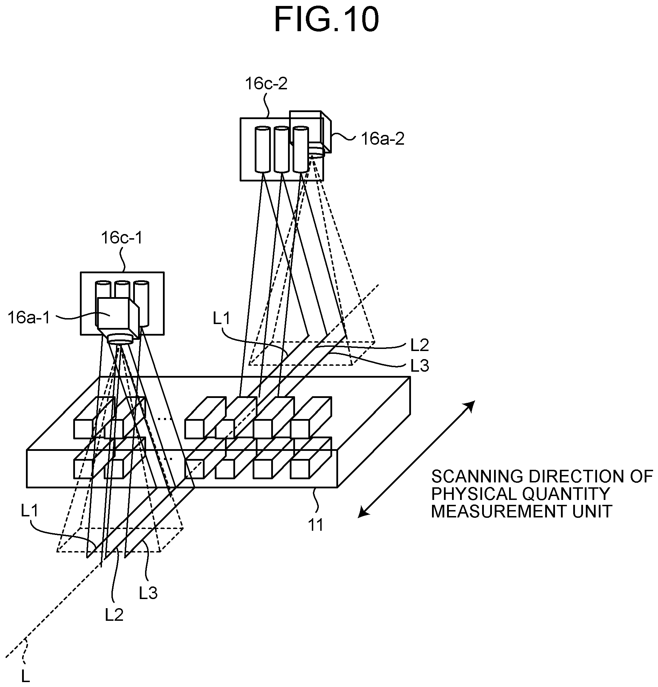

FIG. 9 and FIG. 10 are schematic views illustrating a configuration of the first modification example of the measurement device 1. As illustrated in FIG. 9 and FIG. 10, in the present modification example, a measurement device 10 includes a physical quantity measurement unit 11, an evaluation unit 12, an operation unit 13, a display unit 14, a sensor attachment state monitoring unit 15a, a sensor attachment state evaluation unit 15b, a guidance imaging unit 16a (16a-1 and 16a-2), a tracking calculation unit 16b, a guidance unit 16c (16c-1 and 16c-2), an X-direction conveyance mechanism portion 17a, an X-direction movement mechanism portion 17b, a Y-direction movement mechanism portion 17c, and an operation panel 18. The physical quantity measurement unit 11, the evaluation unit 12, the operation unit 13, the display unit 14, the sensor attachment state monitoring unit 15a, and the guidance unit 16c have functions similar to those of the physical quantity measurement unit 2, the evaluation unit 3, the operation unit 4, the display unit 5, the sensor attachment state monitoring unit 6, and the guidance unit 7 of the measurement device 1, respectively. In FIG. 9, the X direction indicates a direction parallel to a conveyance direction of a steel material S, and the Y direction indicates a direction parallel to a width direction (scanning direction) of the steel material S.

In general, an automatic online measurement device such as ultrasonic flaw detection or an eddy current detection of the steel material S inspects an entire surface of the steel material S by performing scanning with the physical quantity measurement unit 11 in the X direction and the Y direction. In the present modification example, the measurement device 10 inspects the entire surface of the steel material S by inspecting the surface of the steel material S by performing scanning with the physical quantity measurement unit 11 in the Y direction by using the Y-direction movement mechanism portion 17c, and by repeating an operation of conveying the steel material S in the X direction at a predetermined pitch by using the X-direction conveyance mechanism portion 17a every time scanning in the Y direction is completed. At this time, a feeding amount of the steel material S in the X direction is the same as the above-described interval WL of the marking lines L. In addition, the marking lines L are drawn in advance on the surface of the steel material S at the interval WL.

The physical quantity measurement unit 11 is provided with the sensor attachment state monitoring unit 15a and the guidance imaging unit 16a. Similarly to that in the embodiment described above, the sensor attachment state monitoring unit 15a monitors whether the sensor of the physical quantity measurement unit 11 is correctly attached to the surface of the steel material S and/or whether an interval between the surface of the steel material S and a surface of the sensor is kept constant. Information acquired by the sensor attachment state monitoring unit 15a is processed by the sensor attachment state evaluation unit 15b of the operation panel 18. In a case where a sensor attachment state is unstable, the unstable portion is displayed as a map on the display unit 14. The guidance imaging unit 16a (16a-1 and 16a-2) shoots an image of the marking line L by an imaging unit and displays, on the display unit 14, an image in which an image of three guide lines is superimposed on the shot image of the marking line.

Then, the guidance unit 16c (16c-1 and 16c-2) projects three line laser beams L1 to L3 onto a front and rear positions in the scanning direction of the physical quantity measurement unit 11. Specifically, the guidance unit 16c (16c-1 and 16c-2) projects the line laser beam L2 on the marking line L, and projects the line laser beams L1 and L3 at intervals PL on the left and right of the line laser beam L2. In other words, the guidance unit 16c (16c-1 and 16c-2) projects the line laser beams L1 and L3 at predetermined intervals (here, the interval PL) with the scanning position (here, the marking line L) interposed therebetween. In addition, the line laser beam L2 indicates the scanning position (marking line L) by passing through the scanning position (marking line L).

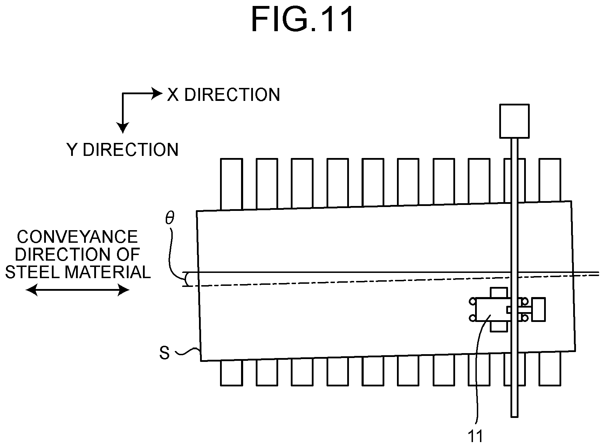

The interval PL between the line laser beams L1 to L3 is set in such a manner as to satisfy the condition expressed in the above expression (4). As a result, the line laser beams L1 and L3 indicate an overlap amount of the physical quantity measurement unit 11 with respect to the marking line L. The tracking calculation unit 16b evaluates whether an amount of positional deviation of the sensor with respect to the marking line L is within an allowable range from the image of the three line laser beams and the marking line L. The tracking calculation unit 16b controls the scanning while correcting the position of the physical quantity measurement unit 11 by using the Y-direction movement mechanism portion 17c in such a manner that the amount of positional deviation is within the allowable range. As a result, even in a case where the steel material S is installed obliquely in the conveyance direction as illustrated in FIG. 11, the scanning can be performed without missing on the entire surface of the steel material S.

[Second modification example]

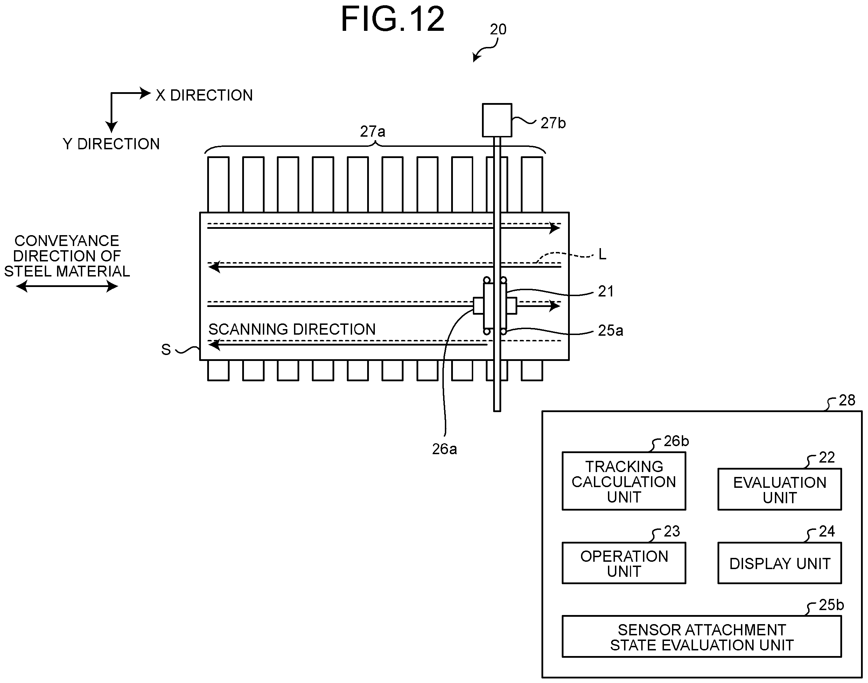

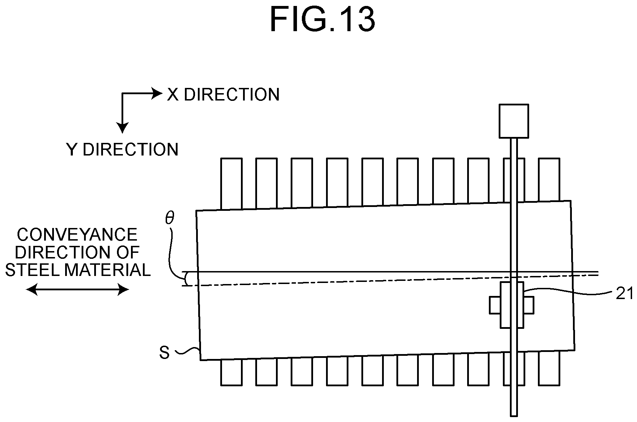

FIG. 12 is a schematic view illustrating a configuration of the second modification example of the measurement device 1. As illustrated in FIG. 12, in the present modification example, a measurement device 20 includes a physical quantity measurement unit 21, an evaluation unit 22, an operation unit 23, a display unit 24, a sensor attachment state monitoring unit 25a, a sensor attachment state evaluation unit 25b, a guidance imaging unit 26a, a tracking calculation unit 26b, a guidance unit 26c (not illustrated), an X-direction conveyance mechanism portion 27a, an X-direction movement mechanism portion 27b, a Y-direction movement mechanism portion 27c, and an operation panel 28. The physical quantity measurement unit 21, the evaluation unit 22, the operation unit 23, the display unit 24, the sensor attachment state monitoring unit 25a, and the guidance unit 26c have functions similar to those of the physical quantity measurement unit 2, the evaluation unit 3, the operation unit 4, the display unit 5, the sensor attachment state monitoring unit 6, and the guidance unit 7 of the measurement device 1, respectively. In the present modification example, the measurement device 20 inspects a surface of a steel material S by performing scanning with the physical quantity measurement unit 21 in the X direction and feeding the steel material S at a predetermined pitch in the Y direction every time the scanning in the X direction at one place is completed. At this time, a feeding amount of the steel material S in the Y direction is the above-described interval WL of the marking lines. Similarly to the first modification example, in the present modification example, even in a case where the steel material S is installed obliquely in a conveyance direction as illustrated in FIG. 13, the scanning can be performed without missing on the entire surface of the steel material S.

Although an embodiment to which the invention made by the present inventors is applied has been described above, the present invention is not limited by the description and drawings that are included in a part of the disclosure of the present invention and that are according to the present embodiment. For example, although the 3MA method in which a sensor for eddy current measurement is used for the physical quantity measurement unit 2 is applied in the present embodiment, the present invention is not limited thereto. As a similar unit that measures a physical quantity, an overcurrent flaw detection method using only an eddy current signal among a plurality of feature quantities measured by the sensor of the 3MA method may be used. Furthermore, a similar effect can be acquired even in a case where the unit to measure the physical quantity is a method using another electromagnetic method (for example, the sensor is a general sensor for eddy current measurement, a sensor for a pulsed eddy current light dress, or a sensor for leakage magnetic flux measurement), a method using an ultrasonic wave (the sensor is an ultrasonic sensor using a piezoelectric vibrator, an ultrasonic sensor that electromagnetically transmits and receives ultrasonic waves, an ultrasonic sensor in which a piezoelectric vibrator is combined with an ultrasonic sensor that electromagnetically transmits and receives ultrasonic waves, or the like), a method using a sound wave (the sensor is a sound wave sensor or the like), a method using an electromagnetic wave (the sensor is a terahertz sensor or the like), a method using light (the sensor is an optical interferometer or the like), or a method combining these methods (the sensor is a combined sensor such as an electromagnetic ultrasonic sensor or a laser ultrasonic sensor, or a combination of the sensors).

Although the physical quantity to be measured is the mechanical characteristic of the surface layer of the measurement target in the present embodiment, the present invention is not limited thereto. Instead of the mechanical characteristic, a defect, a flaw, an impurity, or a characteristic value of an object which value is other than the mechanical characteristic can also be adapted. The characteristic value of the object indicates the mechanical characteristic (such as hardness, yield stress, tensile strength, elongation, or sound speed), temperature, residual stress, film thickness (in a case where a film is present on a surface layer of a measurement target), or the like. The impurity includes a foreign material, an inclusion, and the like. Furthermore, a physical quantity inside the measurement target or a physical quantity of a surface layer on a side opposite to a surface scanned by the measurement unit can also be adapted. In addition, in these cases, the display unit 5 may display a position of the flaw of the object, a position of the impurity, a position where the characteristic value is a preset value, and the like on a map of the object (including from the surface or a cross section).

In the present embodiment, the movement unit 8 is a hand cart (trolley), and the wheels 81a to 81d move when a person pushes the handle 82 with human power, whereby the movement is possible. However, the present invention is not limited to this. The cart 81 may be movable by force of a machine. For example, a driving device such as an electric motor may be attached to the wheels 81a to 81d of the cart 81 and the movement may be performed by the force of the machine. In this case, the electric motor may be driven in such a manner as to reduce a load applied to a user when the user manually pushes the cart. In this case, the operator can perform scanning with the physical quantity measurement unit 2 while controlling the moving direction and the like of the physical quantity measurement unit 2 by the handle 82. Alternatively, the steel material S may be scanned from a remote position. This case also includes a case of semi-automatic or automatic movement. Furthermore, the movement unit 8 may be movable not only in the scanning direction but also in a direction orthogonal to the scanning direction of the measurement target. In this case, when the object that is the measurement target is combined in the object manufacturing facility that can move in the scanning direction, the measurement can be performed without missing on the portion to be measured of the measurement target.

Furthermore, although one guide line passing through the scanning position is included (that is, the line laser beam L2 is projected on the marking line L) in the present embodiment, the present invention is not limited thereto. For example, two guide lines may be arranged immediately adjacent to each other with the scanning position interposed therebetween. Alternatively, one guide line passing through the scanning position and two guide lines on relatively-close both sides with the guide line interposed therebetween, that is, a total of three guide lines may be provided. That is, the effect of the present invention can be acquired when there is one or a plurality of guide lines that can indicate the scanning position in addition to at least two guide lines that guide the scanning position. Although the scanning position is indicated by the marking line L drawn on the steel material S in the present embodiment, the present invention is not limited thereto. For example, the line laser beam L2 may be projected onto the steel material S from another system to which the scanning position is input, and the line laser beam L2 itself may indicate the scanning position.

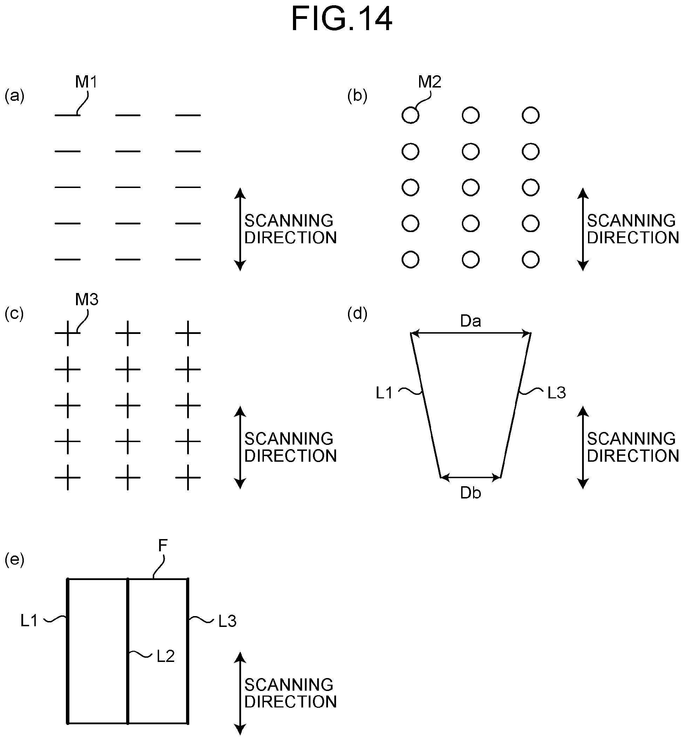

Although the guide line extending in the scanning direction is projected in the present embodiment, the form of the guide line to be projected is not limited to the line. For example, as illustrated in FIG. 14(a), a plurality of linear objects M1 orthogonal to the scanning direction may be linearly arrayed at intervals in the scanning direction, and the entire plurality of linearly arrayed objects M1 may function as a linear guide marker that guides a scanning position. Furthermore, in this case, the form of the object is not limited to the linear shape, and may be a circular object M2 as illustrated in FIG. 14(b) or a cross-shaped object M3 as illustrated in FIG. 14(c). Although the guide lines are projected in parallel to the scanning direction in the present embodiment, guide lines may be projected at an angle in the scanning direction as illustrated in FIG. 14(d). However, in this case, the guide lines may be projected in such a manner that an interval between the guide lines becomes narrower from a front side in the scanning direction toward a rear side in the scanning direction. In this case, an interval Da between the guide lines on the front side in the scanning direction may be determined based on an allowable maximum deviation amount of the sensor. Furthermore, as illustrated in FIG. 14(e), for example, a frame line F may be projected and a form of a frame line portion corresponding to a guide line may be made different from a form of the other frame line portion, whereby a part of the frame line F may be made to function as the guide line.

In the present embodiment, the present invention is applied to a measurement device that measures a defect of a steel material. However, the present invention can be applied to a general guiding device and guiding method that guide a scanning position of a measurement unit, which measures a physical quantity of a measurement target, with respect to the measurement target when scanning with the measurement unit is performed, and a general measurement device and measuring method that measure a physical quantity of the measurement target.

In addition, when the measurement device and the measuring method to which the present invention is applied are provided in an object manufacturing facility, and an object is manufactured while a physical quantity of the object manufactured by the object manufacturing facility is measured, a manufacturing yield of the object can be improved. In addition, by manufacturing the object while measuring the physical quantity of the manufactured object by using the measurement device and the measuring method to which the present invention is applied, it is possible to improve the manufacturing yield of the object by improving the manufacturing yield of the object. In addition, it is possible to control quality of the object by classifying the object based on the physical quantity of the object which physical quantity is measured by utilization of the measurement device and the measuring method to which the present invention is applied.

Furthermore, the guiding device or the guiding method according to the present invention can also be used without the measurement unit. In addition, the object may be manufactured by utilization of the guiding device or the guiding method according to the present invention without the measurement unit. The guiding device at this time includes a guiding unit that guides a scanning position of a working unit, which performs predetermined work on a surface of an object, with respect to the object when the working unit performs scanning. The guiding unit includes at least two linear guide markers that guide the scanning position, and the at least two linear guide markers are arranged at positions ahead of a measurement position of the work in a scanning direction at predetermined intervals with the scanning position being interposed therebetween. In addition, the guiding method at this time includes a guiding step of guiding a scanning position of a working unit, which performs predetermined work on a surface of an object, with respect to the object when the working unit performs scanning. The guiding step includes a step of presenting at least two linear guide markers that guide the scanning position, and the at least two linear guide markers are arranged at positions ahead of a measurement position of the working unit in a scanning direction at predetermined intervals with the scanning position being interposed therebetween.

Even in these cases, it is possible to acquire an effect similar to the effect described in the guiding device or the guiding method of a case where the measurement unit is used. In addition, variations and utilization technologies described in the guiding device or the guiding method of a case where the measurement unit is used are also effective in these cases. Here, examples of the working unit that performs predetermined work on the surface of the object include a device for surface coating, surface polishing, surface finishing, or surface processing. The guiding device may be attached to the working unit and the object may be manufactured while scanning of the surface of the object is performed. That is, it is also possible to improve the manufacturing yield of the object by providing the guiding device according to the present invention in the object manufacturing facility according to the present invention and manufacturing the object by using the guiding device.

In such a manner, other embodiments, examples, operation techniques, and the like made by those skilled in the art based on the present embodiment are all included in the scope of the present invention. In such a manner, other embodiments, examples, operation techniques, and the like made by those skilled in the art based on the present embodiment are all included in the scope of the present invention.

Industrial Applicability

According to the present invention, it is possible to provide a guiding device, a guiding method, a measurement device, and a measuring method capable of performing measurement with high reliability without missing on a portion to be measured of an object. In addition, according to the present invention, it is possible to provide an object manufacturing facility and manufacturing method capable of improving a manufacturing yield of an object by performing measurement with high reliability without missing on a portion to be measured of the object. Furthermore, according to the present invention, it is possible to provide an object quality control method capable of improving quality of an object by performing measurement with high reliability without missing on a portion to be measured of the object.

Reference Signs List

    1 MEASUREMENT DEVICE
    2 PHYSICAL QUANTITY MEASUREMENT UNIT
    3 EVALUATION UNIT
    4 OPERATION UNIT
    5 DISPLAY UNIT
    6 SENSOR ATTACHMENT STATE MONITORING UNIT
    6a to 6d LASER DISTANCE METER
    7 GUIDANCE UNIT
    8 MOVEMENT UNIT
    81 CART
    81a to 81d WHEEL
    82 HANDLE
    9 CONNECTION UNIT
    91 ARM
    92 CYLINDER
    Ch.1 to Ch.N SENSOR
    L MARKING LINE
    L1 to L3 LINE LASER BEAM
    S STEEL MATERIAL

**Claims**

1. A guiding device comprising:

    a guiding unit configured to guide a scanning position of a measurement unit with respect to a measurement target when the measurement unit configured to measure a physical quantity of the measurement target performs scanning, wherein
    the guiding unit includes at least two linear guide markers configured to guide the scanning position, and
    the at least two linear guide markers are arranged at positions ahead of a measurement position of the measurement unit in a scanning direction at predetermined intervals with the scanning position being interposed therebetween.

2. The guiding device according to claim 1, wherein the guiding unit includes one or a plurality of linear guide markers indicating the scanning position.

3. The guiding device according to claim 1 or 2, wherein the at least two linear guide markers extend in the scanning direction.

4. The guiding device according to any one of claims 1 to 3, wherein the guiding unit includes:

    an imaging unit configured to shoot an image including the scanning position; and
    a display unit that displays the guide markers in a manner of being superimposed on the image shot by the imaging unit.

5. The guiding device according to any one of claims 1 to 4, further comprising a monitoring unit configured to

    monitor a pressing amount of the measurement unit against the measurement target and/or an interval between the measurement target and the measurement unit, and
    give notification of predetermined information in a case where the pressing amount and/or the interval do not satisfy a predetermined condition.

6. A guiding method comprising:

    a guiding step of guiding a scanning position of a measurement unit with respect to a measurement target when the measurement unit configured to measure a physical quantity of the measurement target performs scanning, wherein
    the guiding step includes a step of presenting at least two linear guide markers configured to guide the scanning position, and
    the at least two linear guide markers are arranged at positions ahead of a measurement position of the measurement unit in a scanning direction at predetermined intervals with the scanning position being interposed therebetween.

7. A measurement device comprising:

    the measurement unit configured to measure the physical quantity of the measurement target; and
    the guiding device according to any one of claims 1 to 5.

8. An object manufacturing facility comprising:

    a manufacturing facility configured to manufacture an object; and
the measurement device according to claim 7, wherein
the object is manufactured while a physical quantity of the object manufactured in the manufacturing facility is measured with the measurement device.

9. A measuring method comprising a step of measuring a physical quantity of an object by using the guiding method according to claim 6.

10. An object manufacturing method comprising a step of manufacturing the object while measuring the physical quantity of the manufactured object by using the measuring method according to claim 9.

11. An object quality control method comprising a step of classifying the object based on the measured physical quantity by using the measuring method according to claim 9.

12. A guiding device comprising:

a guiding unit configured to guide a scanning position of a working unit with respect to an object when the working unit configured to perform predetermined work on a surface of the object performs scanning, wherein
the guiding unit includes at least two linear guide markers configured to guide the scanning position, and
the at least two linear guide markers are arranged at positions ahead of a measurement position of the work in a scanning direction at predetermined intervals with the scanning position being interposed therebetween.

13. A guiding method comprising:

a guiding step of guiding a scanning position of a working unit with respect to an object when the working unit configured to perform predetermined work on a surface of the object performs scanning, wherein
the guiding step includes a step of presenting at least two linear guide markers configured to guide the scanning position, and
the at least two linear guide markers are arranged at positions ahead of a measurement position of the working unit in a scanning direction at predetermined intervals with the scanning position being interposed therebetween.

14. An object manufacturing facility comprising:

the guiding device according to claim 12, wherein

the object is manufactured by utilization of the guiding device.

# FIG.1

(a)

(b)

SCANNING
DIRECTION

# FIG.2

```
┌─────────────────────────────────────┐ ⟡1
│  MEASUREMENT DEVICE                  │
│                                      │
│     ┌──────────────────────┐ ⟡2     │
│     │ PHYSICAL QUANTITY     │        │
│     │ MEASUREMENT UNIT      │        │
│     └──────────────────────┘        │
│                                      │
│     ┌──────────────────────┐ ⟡3     │
│     │ EVALUATION UNIT       │        │
│     └──────────────────────┘        │
│                                      │
│     ┌──────────────────────┐ ⟡4     │
│     │ OPERATION UNIT        │        │
│     └──────────────────────┘        │
│                                      │
│     ┌──────────────────────┐ ⟡5     │
│     │ DISPLAY UNIT          │        │
│     └──────────────────────┘        │
│                                      │
│     ┌──────────────────────┐ ⟡6     │
│     │ SENSOR ATTACHMENT     │        │
│     │ STATE MONITORING      │        │
│     │ UNIT                  │        │
│     └──────────────────────┘        │
│                                      │
│     ┌──────────────────────┐ ⟡7     │
│     │ GUIDANCE UNIT         │        │
│     └──────────────────────┘        │
│                                      │
│     ┌──────────────────────┐ ⟡8     │
│     │ MOVEMENT UNIT         │        │
│     └──────────────────────┘        │
│                                      │
└─────────────────────────────────────┘
```

# FIG.3

(a)

SCANNING
DIRECTION

(b)

SCANNING
DIRECTION

# FIG.4

LONGITUDINAL DIRECTION

WIDTH DIRECTION

Line 1

WL

Line 2

Line 3

Line 4

⋮

⋮

Line n

L

S

# FIG.5

SCANNING DIRECTION

Sw

Wo

Ch.1  Ch.3  Ch.5  Ch.7  Ch.N-1

Ws

Ps

Ch.2  Ch.4  Ch.6  Ch.8  Ch.N

# FIG.6

# FIG.7

# FIG.8

(a)

(b)

# FIG.9

EP 4 414 668 A1

# FIG.10

16c-2

16a-2

16c-1

16a-1

L1

L2

L3

L1

L3

L2

L

11

SCANNING DIRECTION OF
PHYSICAL QUANTITY
MEASUREMENT UNIT

# FIG.11

# FIG.12

CONVEYANCE DIRECTION OF STEEL MATERIAL

X DIRECTION

Y DIRECTION

SCANNING DIRECTION

| TRACKING CALCULATION UNIT | EVALUATION UNIT |
|---|---|
| OPERATION UNIT | DISPLAY UNIT |
| SENSOR ATTACHMENT STATE EVALUATION UNIT | |

EP 4 414 668 A1

# FIG.13

X DIRECTION

Y DIRECTION

CONVEYANCE
DIRECTION OF
STEEL MATERIAL

θ

S

21

# FIG.14

(a) M1

SCANNING
DIRECTION

(b) M2

SCANNING
DIRECTION

(c) M3

SCANNING
DIRECTION

(d)

Da

L1            L3

Db

SCANNING
DIRECTION

(e) F

L1            L3

L2

SCANNING
DIRECTION

## INTERNATIONAL SEARCH REPORT

International application No.

**PCT/JP2022/039920**

### A. CLASSIFICATION OF SUBJECT MATTER

*G01D 21/00*(2006.01)i; *G01B 11/00*(2006.01)i; *G01N 29/265*(2006.01)i
FI: G01D21/00 K; G01B11/00 H; G01N29/265

According to International Patent Classification (IPC) or to both national classification and IPC

### B. FIELDS SEARCHED

Minimum documentation searched (classification system followed by classification symbols)

G01D21/00; G01B11/00; G01N29/265

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 5-296986 A (KAWASAKI STEEL CORP.) 12 November 1993 (1993-11-12) paragraphs [0001], [0023]-[0039], fig. 1-6 | 1-3, 6-14 |
| A | | 4-5 |
| Y | JP 5-46241 A (NISSAN MOTOR CO., LTD.) 26 February 1993 (1993-02-26) paragraphs [0006], [0009], fig. 1, 3 | 1-3, 6-14 |
| Y | JP 1-237803 A (SUMITOMO METAL INDUSTRIES, LTD.) 22 September 1989 (1989-09-22) p. 4, upper left column, line 20 to upper right column, line 2 | 8, 10-11, 14 |
| Y | Microfilm of the specification and drawings annexed to the request of Japanese Utility Model Application No. 86176/1985 (Laid-open No. 3463/1986) (TATEISI ELECTRONICS CO.) 10 January 1986 (1986-01-10), p. 4, lines 8-18 | 11 |
| A | JP 2019-518216 A (EROP AS) 27 June 2019 (2019-06-27) entire text, all drawings | 1-14 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **27 December 2022** | **17 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2022/039920**

| Patent document cited in search report | | | Publication date (day/month/year) | Patent family member(s) | | | Publication date (day/month/year) |
|---|---|---|---|---|---|---|---|
| JP | 5-296986 | A | 12 November 1993 | (Family: none) | | | |
| JP | 5-46241 | A | 26 February 1993 | (Family: none) | | | |
| JP | 1-237803 | A | 22 September 1989 | (Family: none) | | | |
| JP | 61-3463 | U1 | 10 January 1986 | (Family: none) | | | |
| JP | 2019-518216 | A | 27 June 2019 | US | 2019/0162703 | A1 | |
| | | | | entire text | | | |
| | | | | WO | 2017/217862 | A1 | |
| | | | | EP | 3494395 | A1 | |
| | | | | CA | 3046176 | A1 | |
| | | | | BR | 112018075848 | A2 | |
| | | | | CN | 109564196 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BERND WOLTER ; YASMINE GABI ; CHRISTIAN CONRAD.** Nondestructive Testing with 3MA-An Overview of Principles and Application. *Appl. Sci.,* 2019, vol. 9, 1068

- **GERALD SCHNEIBEL ; CHRISTOPH KONIG ; ASCHWIN GOPALAN ; JEAN-MARC DUSSAULX.** Development of an Eddy Current based Inspection Technique for the Detection of Hard Spots on Heavy Plates. *19th World Conference on Non-Destructive Testing,* 2016